# EUROPEAN PATENT APPLICATION

(11) **EP 2 579 250 A2**
(43) Date of publication of application: **10.04.2013**
(21) Application number: 12184019.3
(22) Date of filing: 12.09.2012
(51) Int. Cl.: G10L 15/18

(54) **Method for discovering key entities and concepts in data**

(30) Priority: 03.10.2011 US 201113251322
(71) Applicant: NUANCE COMMUNICATIONS, INC., Burlington MA 01803-4613 (US)
(72) Inventor: Balchandran, Rajesh, Verona, WI Wisconsin 53593 (US); Rachevsky, Leonid, Ossining, NY New York 10562 (US); Ramabhadran, Bhuvana, Mount Kisco, NY New York 10549 (US)
(74) Representative: Lucke, Andreas

(57) **Abstract**

A method of automatically processing text data is described. An initial set of data tags is developed that characterize text data in a text database. Higher order entities are determined which are characteristic of patterns in the data tags. Then the text data is automatically tagged based on the higher order entities.

## Description

### TECHNICAL FIELD

The present invention relates to data concepts associated with natural language data sets.

### BACKGROUND ART

Natural Language Understanding (NLU) technology uses statistical methods to extract the semantics content from a user input. For example, call routing NLU applications semantically classify a telephone query from a customer to route it to the appropriate set of service agents based on a brief spoken description of the customer's reason for the call. Another example of an NLU system is a voice driven cell phone help application where examples of annotated meaning could be: [functionality: contacts] [question: How to add a contact], [functionality: contacts] [question: How to call a contact], etc. Some examples of user queries could be *How do I call one of my contacts quickly? How do I add my friend info to my list?*

In order to extract semantic meaning from a user input, suitably tagged data is needed. The effort and skill level required to adequately tag large amounts of data is prohibitive and is a major hurdle in deploying large numbers of rich NLU applications.

### SUMMARY

Embodiments of the present invention are directed to automatically processing text data. An initial set of data tags is developed that characterize text data in a text database. Higher order higher order entities are determined which are characteristic of patterns in the data tags. Then the text data is automatically tagged based on the higher order entities.

In specific embodiments, this may further include iteratively repeating the determining and tagging steps multiple times. A text classifier statistical model may be trained based on the tags and text data.

Automatically determining higher order entities may be based on using n-gram models, which may be limited to the data tags. In addition or alternatively, using the n-gram models may include accumulating and grouping the data tags. The higher order entities may include semantic qualities and/or user intentions. And the text database may be for a natural language understanding (NLU) application such as a user dialog application.

Embodiments of the present invention also include a developer interface for tagging text data using any of the above approaches. Embodiments of the present invention also include a computer program product in a computer readable storage medium for execution on at least one processor of a method of automatically processing text data, the computer program product having instructions for execution on the at least one processor comprising program code for tagging text data using any of the above approaches.

### BRIEF DESCRIPTION OF THE DRAWINGS

Figure 1 shows an example of a system for tagging data according to embodiments of the present invention.

Figure 2 shows various logical steps in tagging data according to an embodiment of the present invention.

Figure 3 shows an example of a user interface for tagging data according to an embodiment of the present invention.

### DETAILED DESCRIPTION

Various embodiments of the present invention are directed to rapid tagging of NLU training data that does not require manual inspection of every sentence to quickly obtain a well-tagged corpus without extensive manual tagging. Following this, a suitable statistical tagging model such as an HMM may be trained to learn these various levels of tagging and to predict them at runtime. Thus the trained model can learn and compensate for the imperfect tagging in the training.

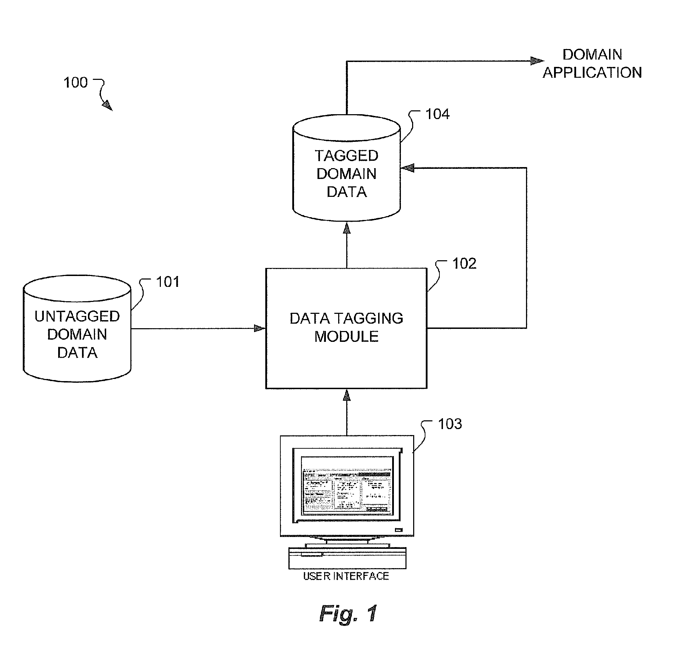

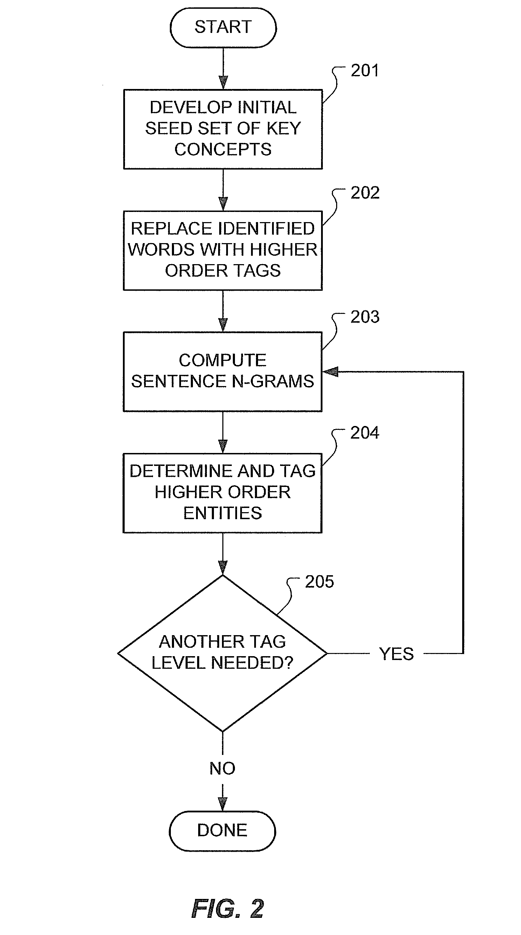

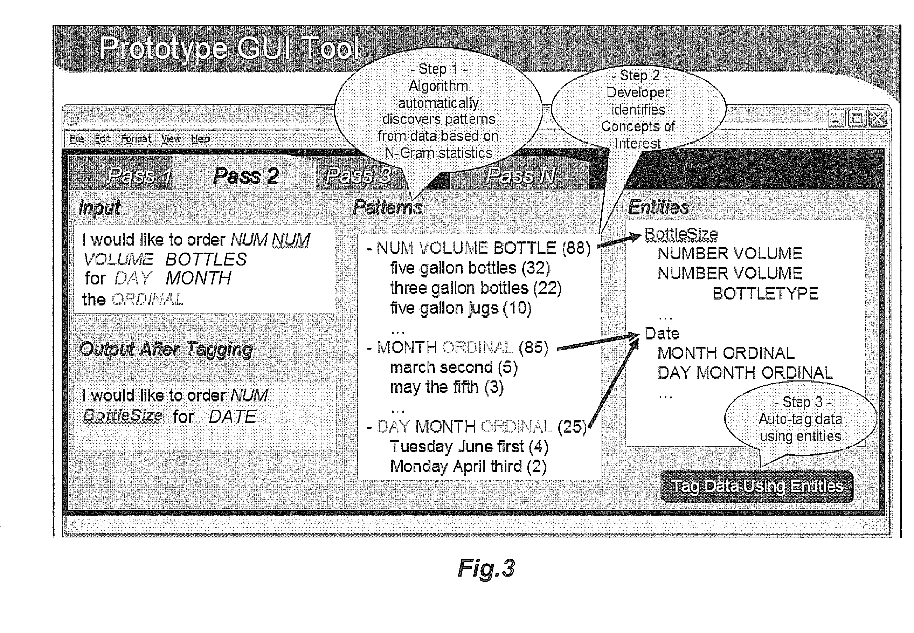

Figure 1 shows an example of a data tagging system and Figure 2 shows various logical steps in tagging data according to one embodiment of the present invention. Data tagging module **102** receives untagged domain data **101.** User workstation **103** includes a GUI (see Fig. 3) for supervising and controlling the process. The data tagging module **102** outputs tagged domain data **104.**

The data tagging module **102** first develops an initial set of data tags that characterize text data in the domain data **101,** step **201.** This can be thought of as a simple 'seed' tag set for a first level of tagged domain data **104.** More specifically, the data tagging module **102** initially identifies simple (domain independent and unambiguous) relevant words for the specific domain by examining the vocabulary. This can typically be done automatically using lists and regular expressions or using techniques such as Conditional Random Fields (CRFs). For example, the data for one water related domain contained about 1000 unique words. About 100 of these words were identified as relevant. This initial set of key concepts does need not to be perfect as subsequent steps will reveal any important words that might have been left out. And as the process is iterative, this initial seeding can be repeated. In addition, any words that can be considered aliases or functionally equivalent can be grouped together. For example 'wrong' and 'incorrect' may be grouped. Similarly, repeating words such as, 'water', 'water water', 'some water', 'any water' etc. can all be considered 'water' with no loss of information. Again this grouping may be iterated as required.

The data tagging module **102** can then replace the identified words and groups of words with class names (e.g. WRONG and WATER for the above examples), step **202,** tagging the domain data **104** with these class names. The data tagging module **102** could use a simple algorithm based on regular expressions with support for handling exceptions, or this could be done simply by inspection. Use of a list of seed words at the tart ensures that relevant concepts are identified. Without this most frequently observed chunks are likely to be prefixes such as, "I want to", "I need to" etc.

The data tagging module **102** then computes n-gram statistics for each sentence in the tagged domain data **104,** step **203.** It may be useful if the data tagging module **102** only considers n-grams composed of data tags stripping off untagged words at the ends. So, for example, *want to SPEAK to PERSON please* becomes *SPEAK to PERSON.* All such n-grams can be accumulated and grouped based on the presence of the same tags so that phrases such as *SPEAK to PERSON* and *SPEAK to a PERSON* are grouped together since they are both requests to speak to someone. For water data this generated concepts such as:
*SPEAK PERSON:2049*
   SPEAK to PERSON:1094
   SPEAK to a PERSON:564
   SPEAK with PERSON:97 ...
*NEXT W_DELIVERY DATE:141*
   NEXT W_DELIVERY DATE:121
   NEXT W_DELIVERY is DATE:5
   NEXT W_DELIVERY for DATE:4...
*W_CANCEL W_DELIVERY:351*
   W_CANCEL W_DELIVERY:134
   W_CANCEL my W_DELIVERY:101
   W_CANCEL the W_DELIVERY:41...

In this manner relevant concepts that carry deep meaning information can be discovered and the domain data **104** be tagged with labels for the relevant dialog application, step **204.**

The data tagging module **104** then iteratively repeats this process to determine and tag higher order entities which are characteristic of patterns in the data tags in the existing tagged domain data **104,** step **205.** This iterative repeating and extending of the tagging process is useful to develop multiple levels of meaning - for example, starting with simple named entities (number, month etc.) followed by compound named entities (e.g. date), and similarly for user intents and other key concepts in the data.

Thus, for higher order iterations, the sentence n-grams are recomputed, step **203,** for the tagged domain data **104** so that the n-grams are accumulated and grouped based on the presence of equivalent tags. This ensures that phrases such as *Second of March* and *Fifth day of June* are grouped together as they are both dates. So for water data, this generated concepts such as:
NUMBER VOLUME: 88
   five gallon: 61
   three gallon: 16
   two gallon: 3
   four liter: 2
   six gallon: 2
   twenty gallon: 1
   ten gallon: 1
   five liter: 1
   two liter: 1
MONTH ORDINAL: 85
   april thirteenth: 8
   april twelfth: 7
   april fifteenth: 5
   april eighth: 5

In this manner higher order entities can be discovered and tagged with labels that are relevant to the dialog application, step **204.** So for example, the pattern *NUMBER VOLUME BOTTLE* is identified and replaced with a higher order entity tag, *BottleSize,* and the pattern *DAY MONTH ORDINAL* is identified and replaced with a higher order entity tag, *Date.* The domain data **104** then is automatically tagged based on the higher order entities. So, *I would like to order NUM NUM VOLUME BOTTLES for DAY MONTH ORDINAL* becomes *I would like to order NUM BottleSize for Date.*

Figure 3 shows an example of a user interface for tagging data according to an embodiment of the present invention. In this manner higher order entities can be discovered and tagged with labels that are relevant to the dialog application. For example, the left side of the Pass 2 tab shows an example of an input phrase with a set of lower level entity tags: "I would like to order NUM NUM VOLUME BOTTLES for DAY MONTH the ORDINAL." The center of the Pass 2 tab in Fig. 3 shows that the tagging module has automatically discovered patterns in the input from N-Gram statistics developed from the application data for the experiments with water ordering data, where the data tag pattern, NUM VOLUME BOTTLE occurs in data 88 times, the data tag pattern, MONTH ORDINAL occurs in the data 85 times, and DAY MONTH ORDINAL occurs in the data 25 times. From this, the developer using the interface tool can identify which of these patterns represent concepts of interest that can be combined into higher order entity data tags. In the case of Fig. 3, the developer using the interface determines that NUM VOLUME BOTTLE can be combined into a new higher order entity data tag, *BottleSize,* and also that MONTH ORDINAL and DAY MONTH ORDINAL can be combined into a new higher order entity data tag, *Date.* The tagging module then auto-tags the application with the new higher order entity tags, which results in the current input phrase being reparsed into: "I would like to order NUM **BottleSize** for **Date."**

Embodiments of the invention may be implemented in whole or in part in any conventional computer programming language. For example, preferred embodiments may be implemented in a procedural programming language (*e.g*., "C") or an object oriented programming language (*e.g*., "C++", Python). Alternative embodiments of the invention may be implemented as pre-programmed hardware elements, other related components, or as a combination of hardware and software components.

Embodiments can be implemented in whole or in part as a computer program product for use with a computer system. Such implementation may include a series of computer instructions fixed either on a tangible medium, such as a computer readable medium (*e.g*., a diskette, CD-ROM, ROM, or fixed disk) or transmittable to a computer system, via a modem or other interface device, such as a communications adapter connected to a network over a medium. The medium may be either a tangible medium (*e.g*., optical or analog communications lines) or a medium implemented with wireless techniques (*e.g*., microwave, infrared or other transmission techniques). The series of computer instructions embodies all or part of the functionality previously described herein with respect to the system. Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies. It is expected that such a computer program product may be distributed as a removable medium with accompanying printed or electronic documentation (*e.g*., shrink wrapped software), preloaded with a computer system (*e.g*., on system ROM or fixed disk), or distributed from a server or electronic bulletin board over the network (*e.g*., the Internet or World Wide Web). Of course, some embodiments of the invention may be implemented as a combination of both software (*e.g*., a computer program product) and hardware. Still other embodiments of the invention are implemented as entirely hardware, or entirely software (*e.g*., a computer program product).

Although various exemplary embodiments of the invention have been disclosed, it should be apparent to those skilled in the art that various changes and modifications can be made which will achieve some of the advantages of the invention without departing from the true scope of the invention.

## Claims

1. A method of automatically processing text data comprising:
developing an initial set of data tags characterizing text data in a text database;
automatically determining higher order entities characteristic of patterns in the data tags; and
automatically tagging the text data based on the higher order entities.

2. A method according to claim 1, further comprising:
iteratively repeating the determining and tagging steps a plurality of times.

3. A method according to claim 1, further comprising:
training a text classifier statistical model based on the tags and text data.

4. A method according to claim 1, wherein the automatically determining higher order entities includes using n-gram models.

5. A method according to claim 4, wherein the n-gram models are limited to the data tags.

6. A method according to claim 4, wherein using n-gram models includes accumulating and grouping the data tags.

7. A method according to claim 1, wherein the higher order entities include semantic qualities.

8. A method according to claim 1, wherein the higher order entities include user intentions.

9. A method according to claim 1, wherein the text database is for a natural language understanding (NLU) application.

10. A method according to claim 1, wherein the text database is for a user dialog application.

11. A developer interface for tagging text data using the method according to any of claims 1-10.

12. A computer program product in a computer readable storage medium for execution on at least one processor of a method of automatically processing text data, the computer program product having instructions for execution on the at least one processor comprising program code for performing the method according to any of claims 1-10.
